# EUROPEAN PATENT SPECIFICATION

(11) **EP 2 383 140 B1**
(45) Date of publication and mention of the grant of the patent: **24.05.2017**
(21) Application number: 09825891.6
(22) Date of filing: 10.11.2009
(51) Int. Cl.: B60K 6/387, B60K 6/48, B60K 6/543, B60K 6/547, B60K 17/02, B60L 11/14, B60W 10/02, B60W 10/06, B60W 10/08, B60W 20/00, B60K 6/40, B60W 10/113, F16H 3/00, F16H 9/18

(54) **POWER TRANSMITTING DEVICE FOR HYBRID VEHICLE**
KRAFTÜBERTRAGUNGSVORRICHTUNG FÜR EIN HYBRIDFAHRZEUG
DISPOSITIF DE TRANSMISSION DE PUISSANCE POUR VÉHICULE HYBRIDE

(30) Priority: 11.11.2008 JP 2008288696
(43) Date of publication of application: 02.11.2011
(73) Proprietor: Kabushiki Kaisha F.C.C., Hamamatsu-shi Shizuoka 431-1394 (JP)
(72) Inventor: OHASHI, Tatsuyuki, Hamamatsu-shi Shizuoka 431-1304 (JP); ASATSUKE, Shouji, Hamamatsu-shi Shizuoka 431-1304 (JP); OISHI, Akio, Hamamatsu-shi Shizuoka 431-1304 (JP); CHIBA, Ryouhei, Hamamatsu-shi Shizuoka 431-1304 (JP); ISHIMURA, Jun, Hamamatsu-shi Shizuoka 431-1304 (JP); ISHIKAWA, Keiichi, Hamamatsu-shi Shizuoka 431-1304 (JP)
(74) Representative: Cohausz & Florack
(86) International application number: PCT/JP2009/005972
(87) International publication number: WO 2010/055637

(56) References cited:
- WO-A1-2007/022836
- WO-A1-2007/022836
- FR-A1- 2 833 538
- US-A1- 2002 086 755

## Description

### Field of the Invention

The present invention relates to a power transmitting apparatus of a hybrid vehicle for properly transmit or cut-off the driving force of an engine or a motor in accordance with running conditions of vehicle.

### Description of Background Art

In recent years it has been noticed a hybrid vehicle equipped with both an engine and a motor in view of fuel consumption and ecology. In such a hybrid vehicle it is possible to improve the fuel consumption and reduce exhaust emission as compared with conventional vehicles solely using internal combustion engines by properly driving either one of the engine or motor or both the engine and motor in accordance with running conditions.

There has been developed for example a power transmitting apparatus of a hybrid vehicle comprising a first clutch means arranged on the way of a power transmitting system from an engine mounted on a vehicle to driving wheels and adapted to transmit or cut-off the driving force of the engine to or from the driving wheels, a second clutch means arranged on the way of a power transmitting system from a motor mounted on a vehicle to the driving wheels and adapted to transmit or cut-off the driving force of the motor to or

### Patent Document

Patent Document 1: Japanese Laid-open Patent Publication No. 306826/2004

A power transmitting apparatus of a hybrid vehicle according to preamble of claim 1 is known from WO2007/022836.

### Disclosure of the Invention

### Problems to be solved by the Invention

However in the power transmitting apparatus of a hybrid vehicle of the prior art there is a problem that the driving force of the engine is undesirably transmitted to driving wheels via a transmission when trying to start the engine during stoppage of a vehicle or trying to make the motor generate electricity by driving the engine. That is, the driving force is undesirably transmitted to the driving wheels and thus stoppage of a vehicle cannot be kept when trying to transmit the driving force of the engine to the motor by actuating the first and second clutch means.

It is therefore an object of the present invention to provide a power transmitting apparatus of a hybrid vehicle which can keep stoppage of a vehicle with avoiding the transmission of driving force to the driving wheels when trying to transmit the driving force of engine to the motor or reversely the driving force of motor to the engine during stoppage of a vehicle.

### Means for solving problems

For achieving the object mentioned above, there is provided, according to the present invention of claim 1, a power transmitting apparatus of a hybrid vehicle comprising a first clutch means arranged on the way of a power transmitting system from an engine mounted on a vehicle to driving wheels and adapted to transmit or cut-off the driving force of the engine to or from the driving wheels; a second clutch means arranged on the way of a power transmitting system from a motor mounted on a vehicle to the driving wheels and adapted to transmit or cut-off the driving force of the motor to or from the driving wheels; and the first and second clutch means being properly operated in accordance with running conditions of vehicle characterized in that the power transmission from one of the engine and the motor to the other of them can be performed with connecting them each other as well as with cutting-off the power transmission from the engine and the motor to the driving wheels.

It is preferable as defined in claim 2 that the power transmitting apparatus of a hybrid vehicle further comprises a third clutch means arranged between the engine and the motor with bypassing the first and second clutch means and adapted to transmit or cut-off the driving force from one of the engine and the motor to the other of them.

It is preferable as defined in claim 3 that the power transmitting apparatus of a hybrid vehicle further comprises a fourth clutch means arranged between the output side of the first and second clutch means and a transmission mounted on a vehicle and adapted to transmit or cut-off the driving force of the engine or the motor to or from the transmission.

It is preferable as defined in claim 4 that the power transmitting apparatus of a hybrid vehicle of claim 3 further comprises a fifth clutch mean arranged between the output side of the first and second clutch means and the driving wheels with bypassing the transmission mounted on a vehicle and adapted to transmit or cut-off the driving force of the engine or the motor to or from the driving wheels without via the transmission.

It is also preferable as defined in claim 5 that, in the power transmitting apparatus of a hybrid vehicle of any one of claim 1-4, the first clutch means, the second clutch means and two hydraulic pistons corresponding to the first and second clutch means are arranged within a same boxy member, and that the first and second clutch means can be operated in a properly selective manner by controlling the hydraulic pressure for actuating the hydraulic pistons.

It is preferable as defined in claim 6, in the power transmitting apparatus of a hybrid vehicle of any one of claim 1-5, that the second clutch means is activated to transmit the driving force of the motor to the driving wheels and simultaneously the first clutch is deactivated to cut-off the driving force of the engine to the driving wheels on start-up and run of a vehicle driven by the motor.

It is preferable as defined in claim 7 that, in the power transmitting apparatus of a hybrid vehicle of any one of claim 1-6, the motor is reversed on reverse start-up and reverse run of a vehicle driven by the motor.

It is preferable as defined in claim 8 that the power transmitting apparatus of a hybrid vehicle of any one of claim 1-7 further comprises a battery for driving the motor and means for detecting remained electric amount of battery, and that both the driving forces of the engine and the motor are simultaneously transmitted to the driving wheels with activating both the first and second clutch means so long as the remained electric amount of battery detected by the remained electric amount detecting means is within an optimum range.

It is preferable as defined in claim 9 that the power transmitting apparatus of a hybrid vehicle of any one of claims 1-8 further comprises a battery for driving the motor and means for detecting remained electric amount of battery, and that the driving force of the engine is transmitted both to the driving wheels and the motor to make the motor generate electricity when the remained electric amount of battery detected by the remained electric amount detecting means during run of a vehicle is less than the predetermined value.

It is preferable as defined in claim 10 that the power transmitting apparatus of a hybrid vehicle of any one of claims 1-9 further comprises a battery for driving the motor and means for detecting remained electric amount of battery, and that the driving force of the engine to the driving wheels is cut-off and simultaneously the driving force of the engine is transmitted to the motor to make the motor generate electricity when the remained electric amount of battery detected by the remained electric amount detecting means during stoppage of a vehicle is less than the predetermined value.

It is preferable as defined in claim 11 that, in the power transmitting apparatus of a hybrid vehicle of any one of claims 1-10, the driving force of the engine is transmitted to the driving wheels and simultaneously the driving force of the motor to the driving wheels is cut-off on start-up under a low environmental temperature or high speed run of a vehicle.

It is preferable as defined in claim 12 that, in the power transmitting apparatus of a hybrid vehicle of any one of claims 1-11, an automatic transmission is arranged on the way of a power transmitting system between the first and second clutch means and the driving wheels and the speed of a vehicle can be changed by the automatic transmission.

It is also preferable as defined in claim 13 that, in the power transmitting apparatus of a hybrid vehicle of claim 12, the transmission is a continuously variable transmission.

It is preferable as defined in claim 14 that, in the power transmitting apparatus of a hybrid vehicle of claim 12, the transmission is a double clutch type transmission.

It is preferable as defined in claim 15 that, in the power transmitting apparatus of a hybrid vehicle of claim 12, the transmission is a single clutch type transmission.

It is preferable as defined in claim 16 that, in the power transmitting apparatus of a hybrid vehicle of claim 2, the third clutch means is arranged at a radially inner side of a rotor of the motor.

It is preferable as defined in claim 17 that, in the power transmitting apparatus of a hybrid vehicle of any one of claims 1-16, a damper mechanism for damping a torque variation is arranged on the way of a power transmitting system between the engine and the first clutch means.

It is preferable as defined in claim 18 that, in the power transmitting apparatus of a hybrid vehicle of any one of claims 1-17, the power transmitting apparatus of a hybrid vehicle further comprises an electrically driven oil pump, and that the first and second clutch means are arbitrarily activated by the hydraulic pressure generated by the electrically driven oil pump.

### Effects of the Invention

According to the present inventions of claims 1-4, it is possible to keep stoppage of a vehicle with avoiding the transmission of driving force to the driving wheels when trying to transmit the driving force of engine to the motor or reversely the driving force of motor to the engine during stoppage of a vehicle. Accordingly, it is possible to start a stopped engine without requiring any starter as well as to increase chances of charging a battery with enabling a motor generate electricity during stoppage of a vehicle.

According to the present invention of claim 5, since the first clutch means, the second clutch means and two hydraulic pistons corresponding to the first and second clutch means are arranged within a same boxy member, and the first and second clutch means can be operated in a properly selective manner by controlling the hydraulic pressure for actuating the hydraulic pistons, it is possible to further simplify the structure and reduce the size and weight of whole the power transmitting apparatus.

According to the present invention of claim 6, since the second clutch means is activated to transmit the driving force of the motor to the driving wheels and simultaneously the first clutch is deactivated to cut-off the driving force of the engine to the driving wheels on start-up and run of a vehicle driven by the motor, it is possible to improve the efficiency of run performed by the motor.

According to the present invention of claim 7, since the motor is reversed on reverse start-up and reverse run of a vehicle driven by the motor, it is possible to eliminate reverse gears etc. of a transmission and thus to simplify the structure and reduce the size of the power transmitting apparatus.

According to the present invention of claim 8, since the power transmitting apparatus of a hybrid vehicle further comprises a battery for driving the motor and means for detecting remained electric amount of battery, and both the driving forces of the engine and the motor are simultaneously transmitted to the driving wheels with activating both the first and second clutch means so long as the remained electric amount of battery detected by the remained electric amount detecting means is within an optimum range, it is possible to reduce the driving force of the engine and thus improve the fuel consumption.

According to the present invention of claim 9, since the power transmitting apparatus of a hybrid vehicle further comprises a battery for driving the motor and means for detecting remained electric amount of battery, and the driving force of the engine is transmitted both to the driving wheels and the motor to make the motor generate electricity when the remained electric amount of battery detected by the remained electric amount detecting means during run of a vehicle is less than the predetermined value, it is possible to make the motor generate electricity to charge the battery during run of a vehicle.

According to the present invention of claim 10, since the power transmitting apparatus of a hybrid vehicle further comprises a battery for driving the motor and means for detecting remained electric amount of battery, and the driving force of the engine to the driving wheels is cut-off and simultaneously the driving force of the engine is transmitted to the motor to make the motor generate electricity when the remained electric amount of battery detected by the remained electric amount detecting means during stoppage of a vehicle is less than the predetermined value, it is possible to make the motor generate electricity using the driving force of the engine with reducing an unnecessary friction and thus efficiently charge the battery.

According to the present invention of claim 11, since the driving force of the engine is transmitted to the driving wheels and simultaneously the driving force of the motor to the driving wheels is cut-off on start-up under a low environmental temperature or high speed run of a vehicle, it is possible to prevent a vehicle from being started-up by the motor under a poor power condition of battery when the environmental temperature is low and thus prevent the motor from acting as a resistance against run of a vehicle with separating the motor from the power transmitting system during a high speed run.

According to the present invention of claim 12, since an automatic transmission is arranged on the way of a power transmitting system between the first and second clutch means and the driving wheels and the speed of a vehicle can be changed by the automatic transmission, it is possible to change the running speed of a vehicle by the automatic transmission in accordance with the running state of a vehicle and thus adjust the driving force or engine revolution.

According to the present invention of claim 13, since the transmission is a continuously variable transmission, it is possible to continuously change the running speed of a vehicle by the continuously variable transmission in accordance with the running state of a vehicle and thus continuously adjust the driving force or engine revolution.

According to the present invention of claim 14, since the transmission is a double clutch type transmission, it is possible to change the running speed of a vehicle by the double clutch type transmission in accordance with the running state of a vehicle and thus adjust the driving force or engine revolution.

According to the present invention of claim 15, since the transmission is a single clutch type transmission, it is possible to change the running speed of a vehicle by the single clutch type transmission in accordance with the running state of a vehicle and thus adjust the driving force or engine revolution.

According to the present invention of claim 16, since the third clutch means is arranged at a radially inner side of a rotor of the motor, it is possible to add the third clutch means without increasing the axial dimension of the power transmitting apparatus.

According to the present invention of claim 17, since a damper mechanism for damping a torque variation is arranged on the way of a power transmitting system between the engine and the first clutch means, it is possible to transmit the driving force of the engine to the first clutch means with suppressing torque variation.

According to the present invention of claim 18, since the power transmitting apparatus of a hybrid vehicle further comprises an electrically driven oil pump, and the first and second clutch means are activated by the hydraulic pressure generated by the electrically driven oil pump, it is possible to activate the first and second clutch means by operating the electrically driven oil pump although when a mechanical pump of a vehicle cannot be operated under conditions such as a motor starting-up during stoppage of a vehicle.

### Brief Description of the Drawings

[Fig.1] A longitudinal-section view showing the power transmitting apparatus of a hybrid vehicle according to a first embodiment of the present invention;
[Fig. 2] A block diagram diagrammatic view showing the power transmitting apparatus of Fig. 1;
[Fig. 3] An enlarged view showing the clutch means (first clutch means and second clutch means: unactivated condition) of the power transmitting apparatus of Fig. 1;
[Fig. 4] A cross-sectional view taken along a line IV-IV of Fig. 1;
[Fig. 5] An enlarged view showing the third clutch means (unactivated condition) of the power transmitting apparatus of Fig. 1;
[Fig. 6] An enlarged view of the clutch means of the power transmitting apparatus of Fig. 1 showing a condition in which only the first clutch means is activated;
[Fig. 7] An enlarged view of the clutch means of the power transmitting apparatus of Fig. 1 showing a condition in which only the second clutch means is activated;
[Fig. 8] An enlarged view of the clutch means of the power transmitting apparatus of Fig. 1 showing a condition in which only the third clutch means is activated;
[Fig. 9] A table showing contents of control of the selecting device in the power transmitting apparatus of a hybrid vehicle of Fig. 1;
[Fig. 10] A block diagram showing the power transmitting apparatus and transmission of a hybrid vehicle of Fig. 1;
[Fig. 11] A block diagram showing the power transmitting apparatus of a hybrid vehicle according to a second embodiment of the present invention;
[Fig. 12] A table showing contents of control of the selecting device in the power transmitting apparatus of a hybrid vehicle of Fig. 11;
[Fig. 13] A block diagram showing the power transmitting apparatus and transmission of a hybrid vehicle of Fig. 11;

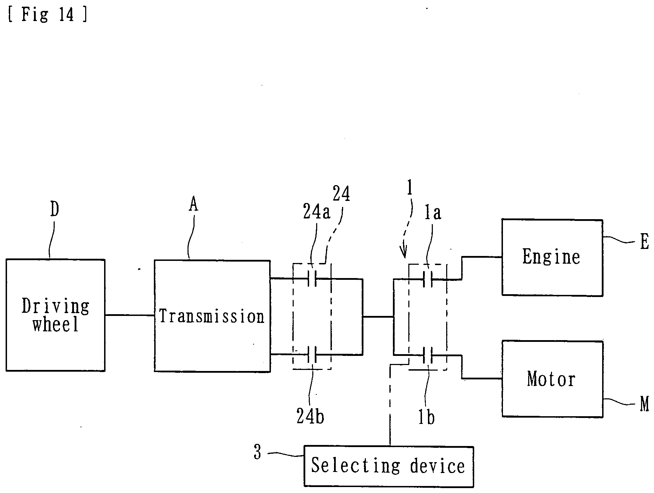

[Fig. 14] A block diagram view showing the power transmitting apparatus of a hybrid vehicle according to a third embodiment of the present invention;
[Fig. 15] A table showing contents of control of the selecting device in the power transmitting apparatus of a hybrid vehicle of Fig. 14;
[Fig. 16] A block diagram showing the power transmitting apparatus and transmission of a hybrid vehicle of Fig. 14;
[Fig. 17] A block diagram view showing the power transmitting apparatus of a hybrid vehicle according to a fourth embodiment of the present invention; and
[Fig. 18] A block diagram showing the power transmitting apparatus and transmission of a hybrid vehicle of Fig. 17. Preferable Modes for carrying out the Invention

Preferable embodiments of the present invention will be described with reference to accompanied drawings.

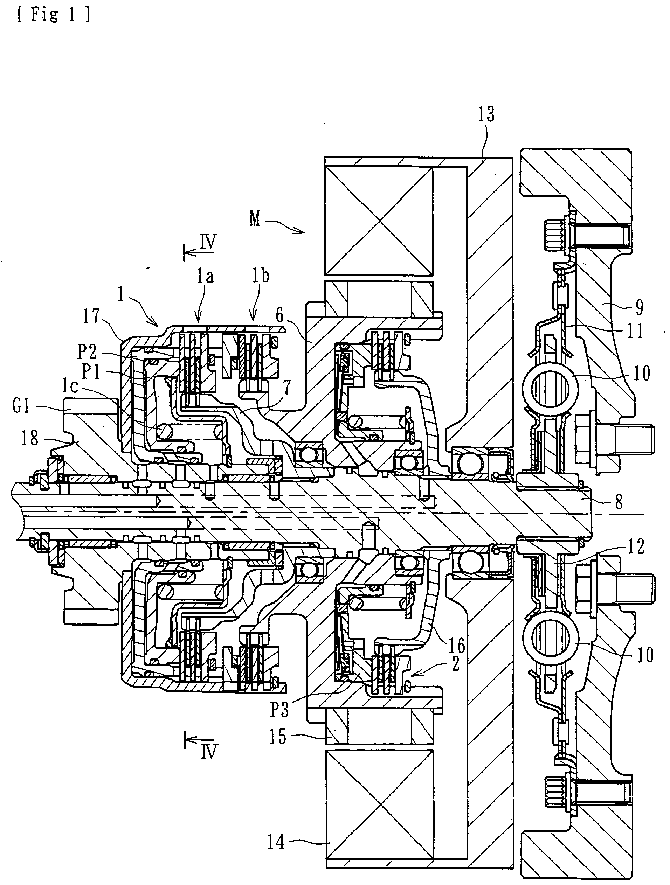

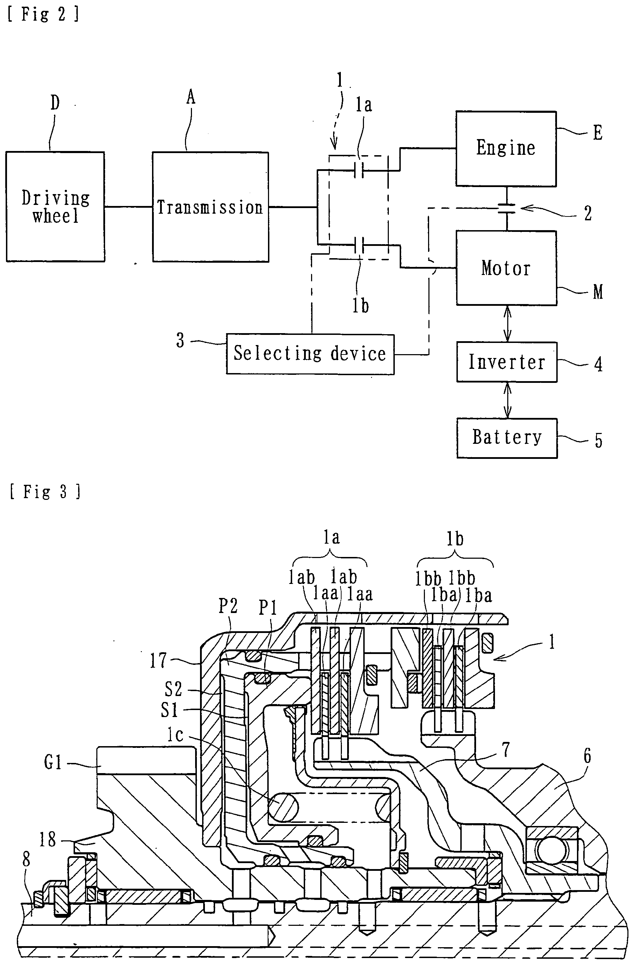

The power transmitting apparatus of a first embodiment of the present invention is intended to transmit or cut off the driving force of an engine E and motor M of a hybrid vehicle to or from the wheels (driving wheels) D and mainly comprises, as shown in Figs. 1 and 2, a first clutch means 1a, a second clutch means 1b, a third clutch means 2, and a selecting device 3. Fig.1 is a longitudinal-section view showing a main part of the power transmitting apparatus of a hybrid vehicle according to a first embodiment of the present invention, and Fig. 2 is a block diagram diagrammatic view showing the power transmitting apparatus of Fig. 1.

As shown in Fig. 2, the power transmitting apparatus of the first embodiment of the present invention comprises a first clutch means 1a arranged on the way of a power transmitting system from the engine E mounted on a hybrid vehicle to driving wheels D and adapted to transmit or cut-off the driving force of the engine E to or from the driving wheels (D), a second clutch means 1b arranged on the way of a power transmitting system from a motor M mounted on a vehicle to the driving wheels D and adapted to transmit or cut-off the driving force of the motor M to or from the driving wheels D, and a transmission A. The first and second clutch means 1a, 1b are united and form a clutch means 1.

In Fig. 1 reference numerals 9, 11 and 12 denote input members rotated by the engine E and a damper mechanism 10 comprising coil springs is interposed between the input members 11 and 12. The input members 9, 11 are rotated by the driving force of the engine E and the driving force of engine E is transmitted to the input member 12 via the damper mechanism 10 to rotate a driving shaft 8 spline-engaged with the input member 12. The driving shaft 8 is connected to a rotational member 7 adapted to be rotated by the driving shaft 8.

On the other hand, the motor M is connected to an inverter 4 and a battery 5 and adapted to be rotated by electric power supplied by the battery 5 as well as to be rotated by the engine E to generate electricity for charging the battery 5. The motor M comprises a stator 14 supported by a supporting member 13 and a rotor 15 supported by a rotational member 6 adapted to be rotated around the driving shaft 8 together with the rotor 15 by electric power supplied by the battery 5.

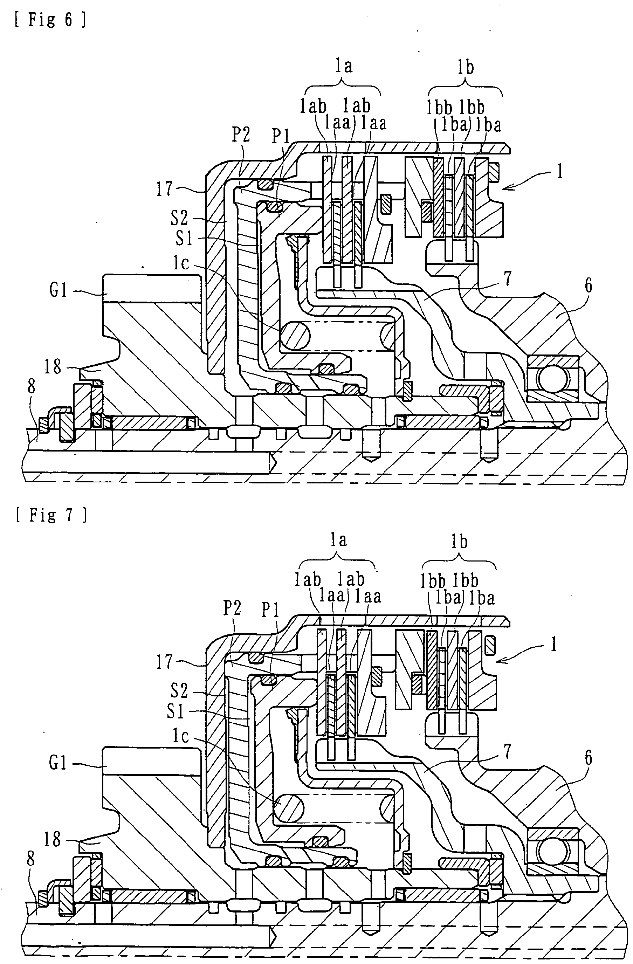

As shown in Fig. 3 the first clutch means 1a comprises a plurality of driving side clutch discs 1aa mounted on the rotational member 7 rotated by the engine E and a plurality of driven side clutch discs 1ab mounted on a boxy member 17. These driving side clutch discs 1aa and driven side clutch discs 1ab are alternately arranged each other to form a laminated structure and can be press-contacted and separated each other. Fig. 6 shows a condition in which the first clutch means 1a is activated and the driving side clutch discs 1aa and the driven side clutch discs 1ab are press-contacted each other.

On the other hand, in the second clutch means 1b as shown in Fig. 3, a plurality of driving side clutch discs 1ba are mounted on the rotational member 6 rotating together with the motor M and a plurality of driven side clutch discs 1bb are mounted on the boxy member 17. These driving side clutch discs 1ba and the driven side clutch discs 1bb are alternately arranged each other to form a laminated structure and can be press-contacted and separated each other. Fig. 7 shows a condition in which the second clutch means 1b is activated and the driving side clutch discs 1ba and the driven side clutch discs 1bb are press-contacted each other. The term "separated" used herein means a condition released from a pressure applied to the clutch discs and thus it is not limited only to a physically separated condition. The transmission of driving force is allowed under the press-contacted condition and cut off under the separated condition.

As shown in Fig. 3 the clutch means 1 comprises the first clutch means 1a, the second clutch means 1b and two hydraulic pistons P1 and P2 corresponding respectively to the first and second clutch means 1a, 1b contained in a same boxy member 17. The first and second clutch means 1a, 1b can be selectively activated by controlling the hydraulic pressure for actuating the hydraulic pistons P1, P2.

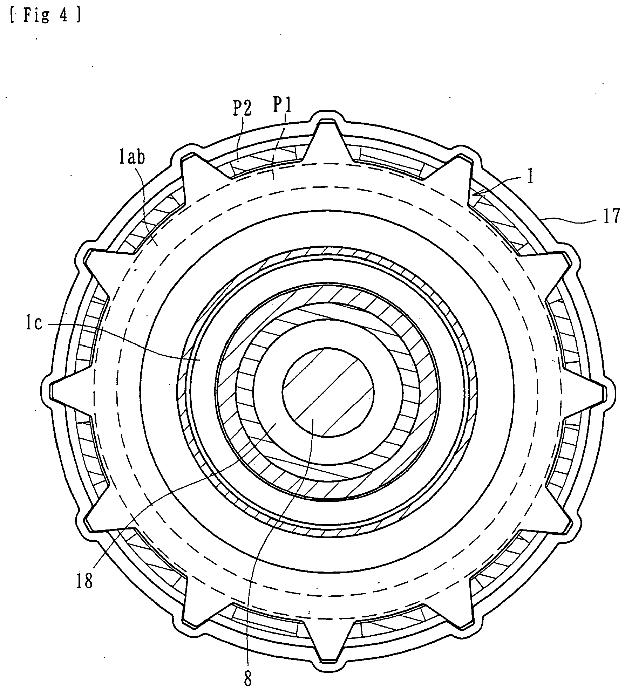

That is, the hydraulic piston P2 is moved toward the right in Fig. 3 against an urging force of a return spring 1c by supplying the operating oil into a hydraulic chamber S2 between the boxy member 17 and the hydraulic piston P2 and thus the second clutch means 1b is pressed by tips formed on the hydraulic piston P2 to press-contact the driving side clutch discs 1ba and the driven side clutch discs 1bb each other. The tips formed on the hydraulic piston P2 can be passed through recesses formed on the peripheries of the driving side clutch discs 1aa and the driven side clutch discs 1ab of the first clutch means 1a as shown in Fig. 4.

The hydraulic piston P1 is moved toward the right in Fig. 3 against an urging force of a return spring 1c by supplying the operating oil into a hydraulic chamber S1 between the hydraulic piston P1 and the hydraulic piston P2 and thus the first clutch means 1a is pressed by tips formed on the hydraulic piston P1 to press-contact the driving side and driven side clutch discs 1aa, 1ab each other. Thus the first clutch means 1a and the second clutch means 1b can be selectively activated by controlling the hydraulic pressures operating the hydraulic pistons P1 and P2 respectively.

The boxy member 17 forming part of the clutch means 1 is connected to an interlocking member 18 formed thereon with a gear G1 mating with a gear formed on an output shaft (not shown). Thus the driving force of the engine E or motor M transmitted through the first or second clutch means 1a or 1b can be transmitted to the interlocking member 18 through the boxy member 17 and further transmitted to the transmission A via the output shaft.

The selecting device 3 selectively activates the first clutch means 1a or the second clutch means 1b by properly selected operation of the hydraulic pistons P1, P2 with supplying operating oil at a predetermined pressure into the hydraulic chamber S1 or S2 in accordance with running conditions of a vehicle in order to achieve any one of runs such as a run using the engine E as a driving power source, a run using the motor M as a driving power source, or a run using both the motor M and engine E as a driving power source. Such a selecting device 3 is for example formed in an ECU (Electronic Control Unit) for controlling the engine E or motor M.

The power transmitting apparatus of a hybrid vehicle of the first embodiment of the present invention is so constructed that it can cut-off the power transmission from the engine E and motor M to the driving wheels D as well as transmit the driving force from one of the engine E and motor M to the other of them by connecting them each other. More particularly the power transmitting apparatus of the first embodiment is equipped with the third clutch means 2 which is arranged between the engine E and the motor M with bypassing the first and second clutch means 1a, 1b (i.e. so as to be able to directly connect the engine E and the motor M) and able to transmit the driving force from one of the engine E and motor M to the other of them.

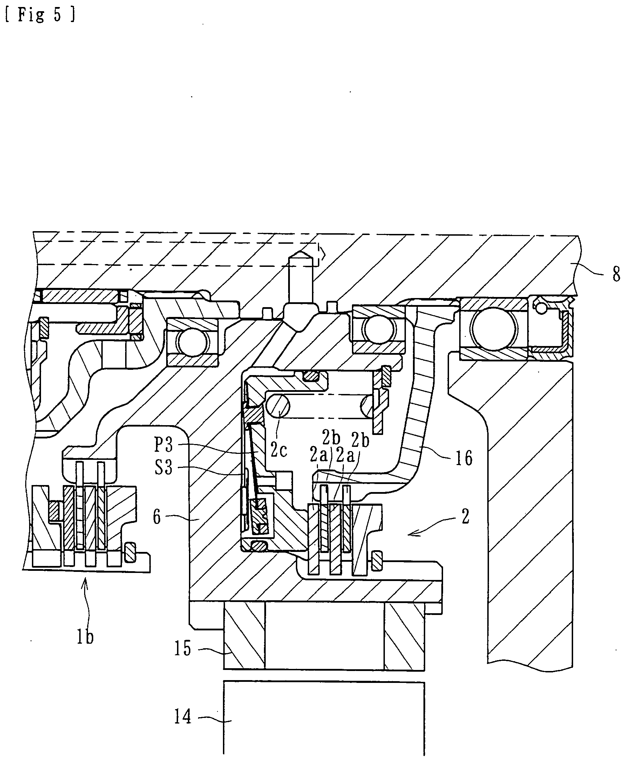

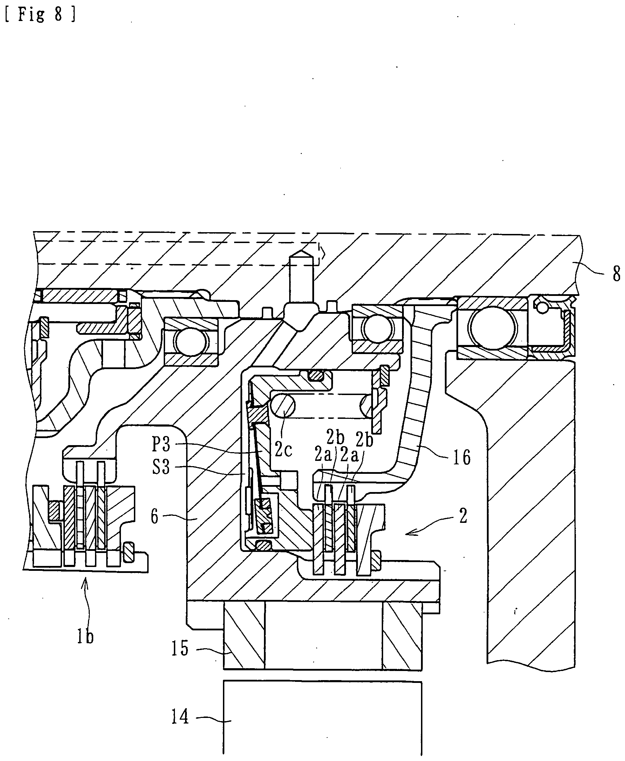

As shown in Fig. 5 the third clutch means 2 is arranged at a radially inner side (inside) of the rotor 15 of the motor M and comprises driving side clutch discs 2a mounted on the rotational member 6 rotatable together with the motor M and driven side clutch discs 2b mounted on the connecting member 16 connected to the driving shaft 8. These driving side clutch discs 2a and driven side clutch discs 2b are alternately arranged each other to form a laminated structure and can be press-contacted and separated each other. Fig. 8 shows a condition in which the third clutch means 2 is activated and the driving side clutch discs 2a and the driven side clutch discs 2b are press-contacted each other.

As shown in Fig. 5 the third clutch means 2 has a hydraulic piston P3 and can be activated by controlling the hydraulic pressure for actuating the hydraulic piston P3. That is, the hydraulic piston P3 is moved toward the right in Fig. 5 against an urging force of a return spring 2c by supplying the operating oil into a hydraulic chamber S3 between the rotational member 6 and the hydraulic piston P3 and thus the third clutch means 2 is pressed by tips formed on the hydraulic piston P3 to press-contact the driving side clutch discs 2a and the driven side clutch discs 2b each other.

Accordingly when the driving side clutch discs 2a and the driven side clutch discs 2b are pressed each other by activation of the third clutch means 2, since the driving shaft 8 and the rotational member 6 are connected, the engine E and the motor M are connected each other and thus the driving force of one of them can be transmitted to the other. In this case when the first clutch means 1a and the second clutch means 1b are not activated and accordingly the driving side clutch discs 1aa and the driven side clutch discs 1ab and the driving side clutch discs 1ba and the driven side clutch discs 1bb are separated, transmission of the driving force from both the engine E and the motor M to the driving wheels D can be cut-off.

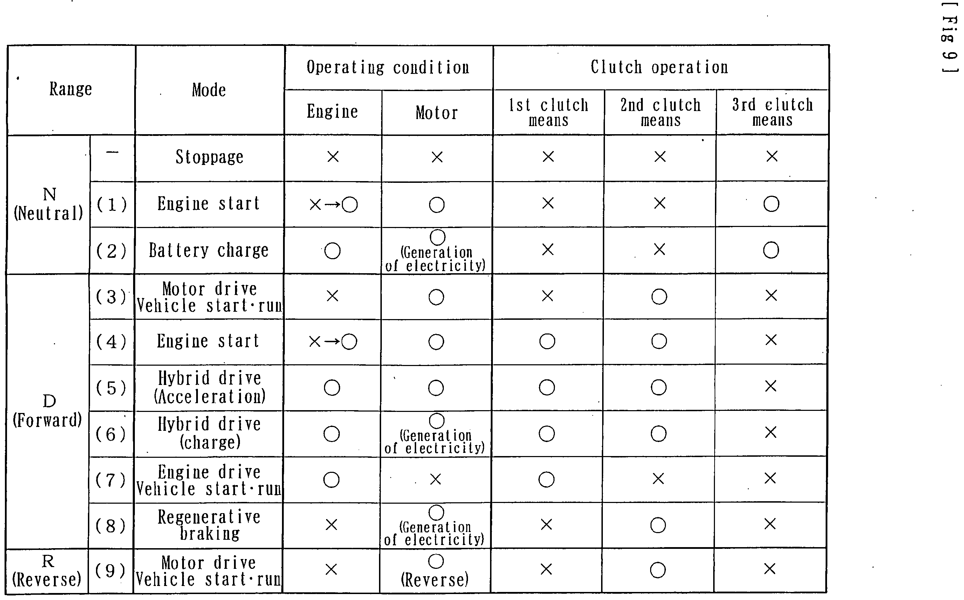

The third clutch means 2 can be properly and selectively activated by the selecting device 3. Table of Fig. 9 shows contents of control of the first, second and third clutch means 1a, 1b and 2 performed by the selecting device 3. According to item (1) in Table of Fig. 9, it is shown that start of the engine E in N (neutral) range of the transmission A can be achieved by the driving force from the motor M to the engine E without using any starter by not activating both the first and second clutch means 1a, 1b and activating the third clutch means 2.

According to the power transmitting apparatus of a hybrid vehicle of the present invention, it is equipped with means for detecting remained electric amount of battery (not shown) (sometimes simply referred to as "remained electric amount detecting means"). As shown in item (2) in Table of Fig. 9, when the remained electric amount of battery 5 detected by the remained electric amount detecting means during stoppage of a vehicle is less than the predetermined value, it is possible to make the motor M generate electricity by cutting-off the driving force of the engine E to the driving wheels D and simultaneously transmitting the driving force of the engine E to the motor M with not activating both the first and second clutch means 1a, 1b and simultaneously activating the third clutch means 2.

According to item (3) in Table of Fig. 9, when the transmission A is in D (drive) range and a vehicle is in starting-up or running condition, the driving force of the motor M can be transmitted to the driving wheels D and on the other hand the transmission of the driving force of the engine E to the driving wheels D is cut-off by not activating both the first and third clutch means 1a, 2 and activating the second clutch means 1b. According to item (4), when starting the engine E in the D range, the engine E can be started by transmitting the driving force of the motor M to the engine E with not activating the third clutch means 2 and activating both the first and second clutch means 1a, 1b.

According to item (5) in Table of Fig. 9, both the driving forces of the engine E and the motor M are simultaneously transmitted to the driving wheels D by activating both the first and second clutch means 1a, 1b with activating both the first and second clutch means 1a, 1b and not activating the third clutch means 2 so long as the remained electric amount of battery 5 detected by the remained electric amount detecting means is within an optimum range.

According to item (6) in Table of Fig. 9, when the remained electric amount of battery 5 detected by the remained electric amount detecting means during run of a vehicle is less than the predetermined value, it is possible to make the motor M generate electricity by transmitting the driving force of the engine E both to the driving wheels D and the motor M with activating both the first and second clutch means 1a, 1b and not activating the third clutch means 2. According to item (7), when a vehicle starts-up under a low environmental temperature or in a high speed run, the driving force of the engine E can be transmitted to the driving wheels D and simultaneously the driving force of the motor M to the driving wheels D can be cut-off by activating the first clutch means 1a and not activating both the second clutch means 1b and the third clutch means 2.

According to item (8) in Table of Fig. 9, it is possible to make the motor M generate electricity by recovering a power from the driving wheels D by cutting-off the driving power of the engine E to the driving wheels D with not activating both the first and third clutch means 1a, 2 and activating the second clutch means 1b during regenerative braking in D range of the transmission A. According to item (9), the reverse starting-up and reverse run can be performed by the motor M by reversely rotating the motor M and not activating both the first and third clutch means 1a, 2 and activating the second clutch means 1b.

According to the present embodiment since the power transmitting apparatus is constructed so that it cuts-off the power transmission from the engine E and the motor M to the driving wheels D and connects the engine E and the motor M each other so as to transmit the power of one of them to the other, it is possible to keep stoppage of a vehicle with avoiding the transmission of driving force of them to the driving wheels D when trying to transmit the driving force of engine E to the motor M or reversely the driving force of motor M to the engine E during stoppage of a vehicle. Accordingly it is possible to start a stopped engine E without requiring any starter as well as to increase chances of charging a battery 5 with enabling a motor M generate electricity during stoppage of a vehicle.

In addition, since the first clutch means 1a, the second clutch means 1b and two hydraulic pistons P1, P2 corresponding to the first and second clutch means 1a, 1b are arranged within a same boxy member 17, and the first and second clutch means 1a, 1b can be operated in a properly selective manner by controlling the hydraulic pressure for actuating the hydraulic pistons P1, P2, it is possible to further simplify the structure and reduce the size and weight of whole the power transmitting apparatus.

Furthermore, since the second clutch means 1b is activated to transmit the driving force of the motor m to the driving wheels D and simultaneously the first clutch 1a is deactivated to cut-off the driving force of the engine E to the driving wheels D on start-up and run of a vehicle driven by the motor M, it is possible to improve the efficiency of run performed by the motor M (see item (3) in Table of Fig. 9). In addition, since the motor M is reversed on reverse start-up and reverse run of a vehicle driven by the motor M, it is possible to eliminate reverse gears etc. of a transmission and thus to simplify the structure and reduce the size of the power transmitting apparatus (see item (9) in Table of Fig. 9).

In addition, since both the driving forces of the engine E and the motor M are simultaneously transmitted to the driving wheels D with activating both the first and second clutch means 1a, 1b so long as the remained electric amount of battery detected by the remained electric amount detecting means is within an optimum range, it is possible to reduce the driving force of the engine E and thus improve the fuel consumption (see item (5) in Table of Fig. 9).

Furthermore, since the driving force of the engine E is transmitted both to the driving wheels D and the motor M to make the motor M generate electricity when the remained electric amount of battery 5 detected by the remained electric amount detecting means during run of a vehicle is less than the predetermined value, it is possible to make the motor M generate electricity to charge the battery 5 during run of a vehicle (see item (6) in Table of Fig. 9). In addition since the driving force of the engine E to the driving wheels D is cut-off and simultaneously the driving force of the engine E is transmitted to the motor M to make the motor M generate electricity when the remained electric amount of battery 5 detected by the remained electric amount detecting means during stoppage of a vehicle is less than the predetermined value, it is possible to make the motor M generate electricity using the driving force of the engine E with reducing an unnecessary friction and thus efficiently charge the battery 5 (see item (2) in Table of Fig. 9).

Furthermore, since the driving force of the engine E is transmitted to the driving wheels D and simultaneously the driving force of the motor M to the driving wheels D is cut-off on start-up under a low environmental temperature or high speed run of a vehicle, it is possible to prevent a vehicle from being started-up by the motor M under a poor power condition of battery 5 when the environmental temperature is low and thus prevent the motor M from acting as a resistance against run of a vehicle with separating the motor M from the power transmitting system during a high speed run (see item (7) in Table of Fig. 9)..

Furthermore, according to the present embodiment, since an automatic transmission A is arranged on the way of a power transmitting system between the first and second clutch means 1a, 1b and the driving wheels D and the speed of a vehicle can be changed by the automatic transmission A, it is possible to change the running speed of a vehicle by the automatic transmission A in accordance with the running state of a vehicle and thus adjust the driving force or engine revolution. The automatic transmission may be a double clutch type transmission or a single clutch type transmission. When using the double clutch type transmission, it is possible to change the running speed of a vehicle in accordance with the running state of a vehicle and thus adjust the driving force or engine revolution and when using the single clutch type transmission, it is possible to change the running speed of a vehicle in accordance with the running state of a vehicle and thus adjust the driving force or engine revolution.

In addition, according to the present invention since the third clutch means 2 is arranged at a radially inner side of a rotor 15 of the motor M, it is possible to add the third clutch means 2 without increasing the axial dimension of the power transmitting apparatus. Furthermore, since a damper mechanism for damping a torque variation is arranged on the way of a power transmitting system between the engine E and the first clutch means 1a, it is possible to transmit the driving force of the engine E to the first clutch means 1a with suppressing torque variation.

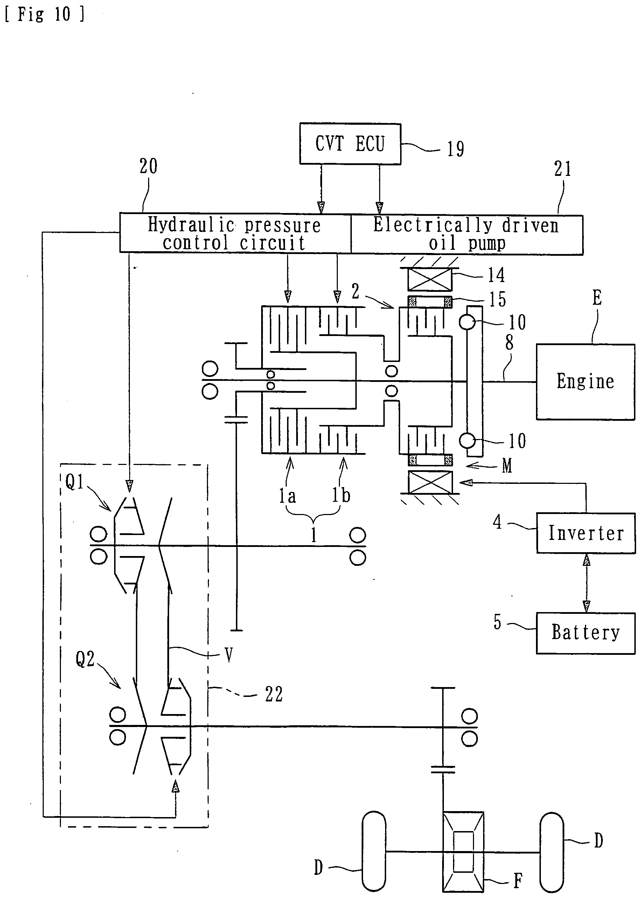

The variable speed unit A of the present invention is preferably an continuously variable speed transmission 22 (e.g. CVT: Continuously Variable Transmission) as shown in Fig. 10. In this case the continuously variable speed transmission 22 may be arranged between the clutch means 1 and the driving wheels D on the way of a power transmitting system from the driving source (engine E and motor M) of a vehicle to the driving wheels D. Such an continuously variable speed transmission 22 comprises two pulleys Q1, Q2 and a belt V extending therebetween and can achieve a desired speed by independently changing diameters of the pulleys Q1, Q2 on which the belt V runs by a hydraulic pressure control circuit 20. A character "F" in Fig. 10 denotes a differential gear equipped with a vehicle.

The continuously variable speed transmission 22 further comprises a CVT ECU 19 electrically connected to a brake switch of a brake pedal, a position sensor of a shifting lever, an engine ECU (not shown) etc. and the hydraulic control circuit 20 is further controlled by the CVT ECU 19. The hydraulic pistons P1-P3 previously described are also controlled by the hydraulic pressure control circuit 20. With adopting the continuously variable speed transmission 22 as the automatic transmission A to be equipped with a vehicle, it is possible to change the running speed of a vehicle in accordance with the running state of a vehicle and thus continuously adjust the driving force or engine revolution.

According to the present invention there is equipped with an electrically driven oil pump 21 which can properly activate the first clutch means 1a, second clutch means 1b or third clutch means 2 by a hydraulic pressure generated by itself. This makes it possible to activate the first and second clutch means 1a, 1b and third clutch means 2 even if the mechanical pump mounted on a vehicle cannot be operated e.g. on motor starting-up during stoppage of a vehicle.

Then the power transmitting apparatus of a hybrid vehicle of a second embodiment of the present invention will be described.

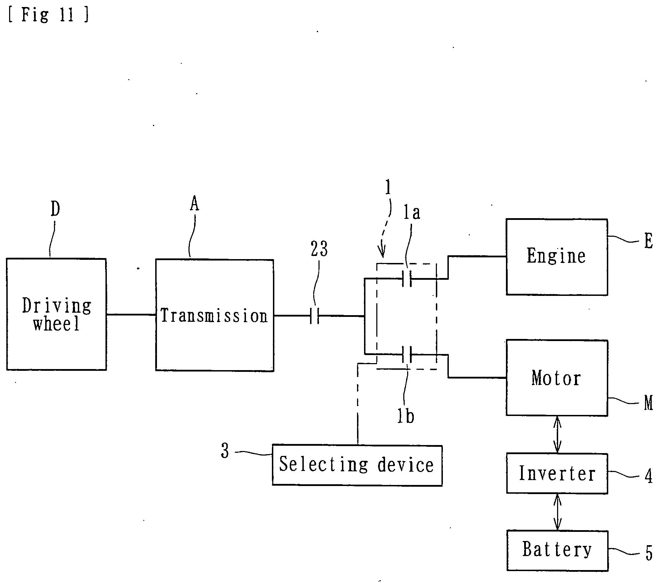

Similarly to the first embodiment the power transmitting apparatus of this embodiment is intended to transmit or cut-off the driving force of the engine E and the motor M as the power source of a hybrid vehicle to the driving wheels D and has a fourth clutch means 23 which is arranged, as shown in Fig. 11, between the output side of the first and second clutch means 1a, 1b and the transmission A mounted on a vehicle and adapted to transmit or cut-off the driving force of the engine E or the motor M to the transmission A. Same reference numerals are used herein for designating same structural elements as those used in the first embodiment and detailed description of them will be omitted.

This embodiment is constructed so that it cuts-off the power transmission from the engine E and the motor M to the driving wheels D and connects the engine E and the motor M so as to transmit the power from one of them to the other. That is, the fourth clutch means 23 enables to cut-off the power transmission from the engine E and the motor M to the driving wheels D as well as the first and second clutch means 1a, 1b enable to connect the engine E and the motor M so as to transmit the power from one of them to the other.

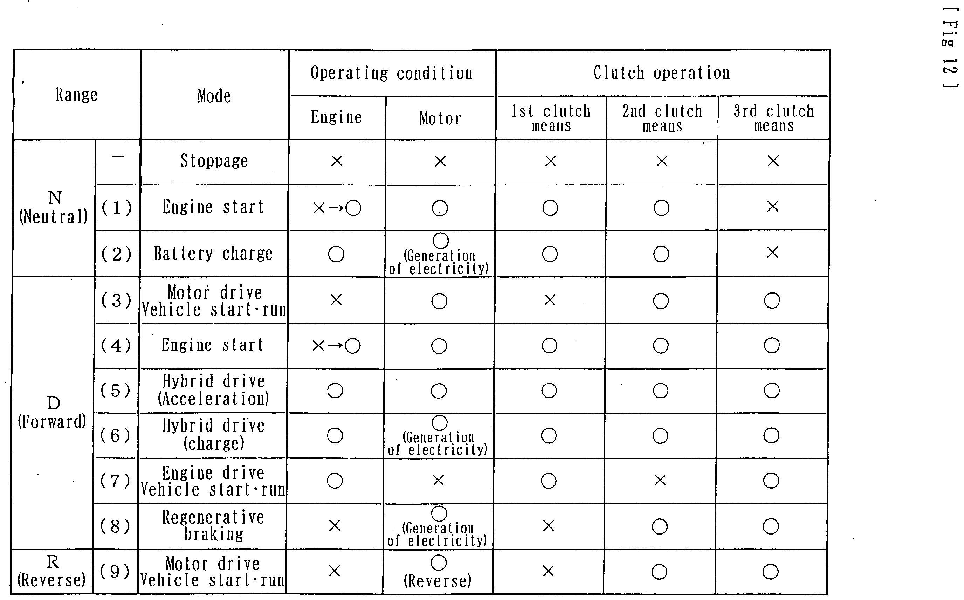

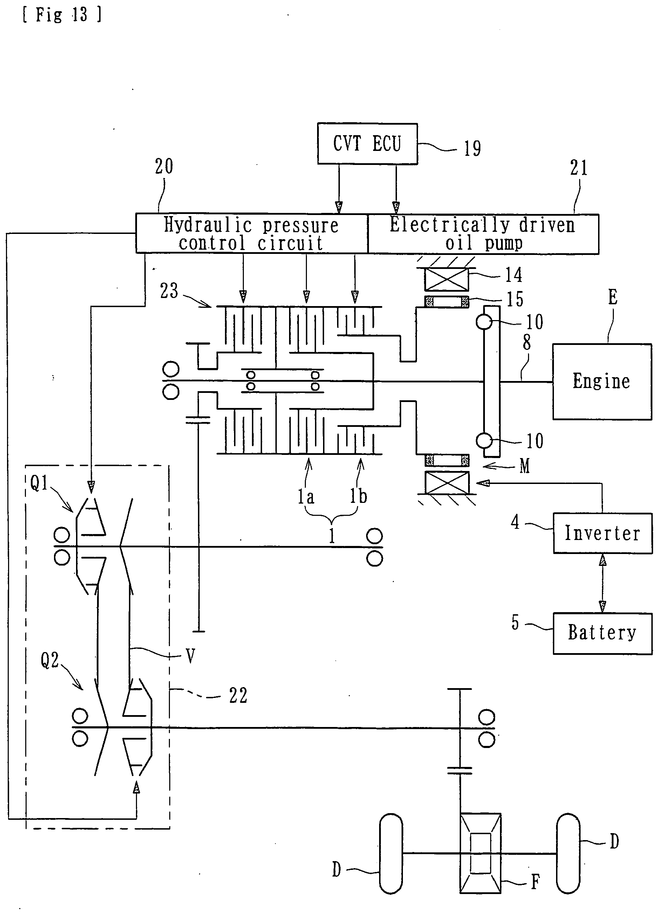

The fourth clutch means 23 can be properly and selectively activated by the selecting device 3. Table of Fig. 12 shows contents of control of the first, second clutch means 1a, 1b and the fourth clutch means 23 performed by the selecting device 3. Fig. 13 shows a modification in which the transmission A is replaced with the continuously variable speed transmission (CVT) 22. With adopting the continuously variable speed transmission 22 as the automatic transmission A to be mounted on a vehicle, it is possible to change the running speed of a vehicle in accordance with the running state of a vehicle and thus continuously adjust the driving force or engine revolution.

Similarly to the first embodiment since this embodiment is constructed so that it cuts-off the power transmission from the engine E and the motor M to the driving wheels D and connects the engine E and the motor M so as to transmit the power from one of them to the other, it is possible to keep stoppage of a vehicle with avoiding the transmission of driving force of them to the driving wheels D when trying to transmit the driving force of engine E to the motor M or reversely the driving force of motor M to the engine E during stoppage of a vehicle. Accordingly, it is possible to start a stopped engine E without requiring any starter as well as to increase chances of charging a battery 5 with enabling a motor M generate electricity during stoppage of a vehicle.

Then the power transmitting apparatus of a hybrid vehicle of a third embodiment of the present invention will be described.

Similarly to the first and second embodiments the power transmitting apparatus of this embodiment is intended to transmit or cut-off the driving force of the engine E and the motor M as the power source of a hybrid vehicle to the driving wheels D and has a fourth clutch means 24 which is arranged between the output side of the first and second clutch means 1a, 1b and the transmission A mounted on a vehicle and adapted to transmit or cut-off the driving force of the engine E or the motor M to the transmission A. The fourth clutch means 24 comprises a fourth clutch means for odd numbered gear 24a and a fourth clutch means for even numbered gear 24b. Same reference numerals are used herein for designating same structural elements as those used in the first and second embodiments and detailed description of them will be omitted.

This embodiment is constructed so that it cuts-off the power transmission from the engine E and the motor M to the driving wheels D and connects the engine E and the motor M so as to transmit the power from one of them to the other. That is, the fourth clutch means 24 (fourth clutch means for odd numbered gear 24a and fourth clutch means for even numbered gear 24b) enables to cut-off the power transmission from the engine E and the motor M to the driving wheels D as well as the first and second clutch means 1a, 1b enables to connect the engine E and the motor M so as to transmit the power from one of them to the other.

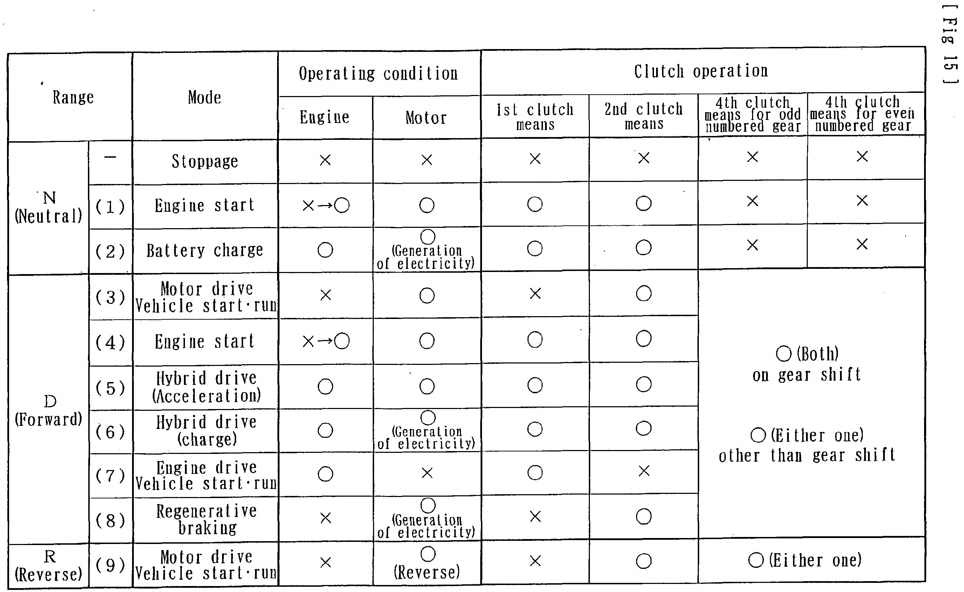

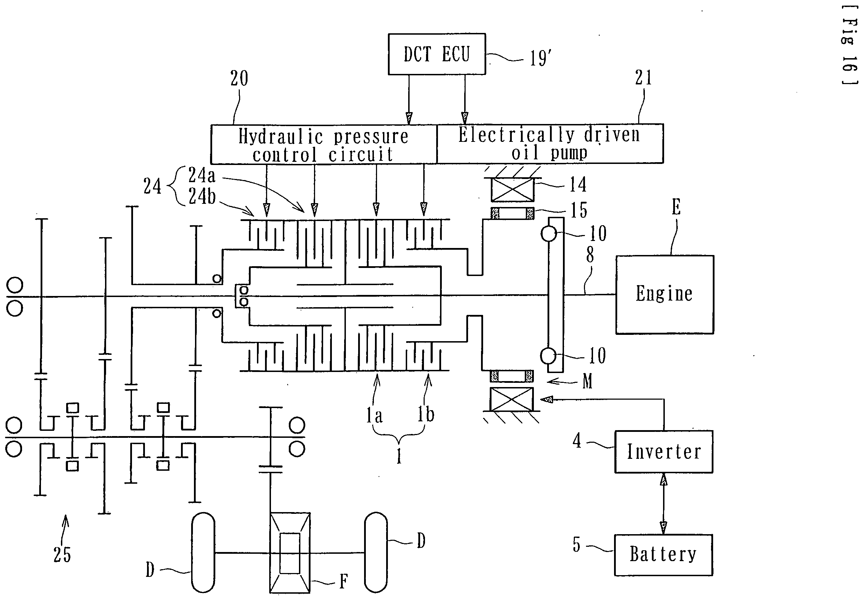

The fourth clutch means 24 (fourth clutch means for odd numbered gear 24a and fourth clutch means for even numbered gear 24b) can be properly and selectively activated by the selecting device 3. Table of Fig. 15 shows contents of control of the first, second clutch means 1a, 1b and fourth clutch means 24 performed by the selecting device 3. Fig. 16 shows a modification in which the transmission A is replaced with a DCT (Dual Clutch Transmission) 25 equipped with transmissions for odd and even numbered gears. A reference numeral 19' denotes DCT ECU.

Similarly to the first and second embodiments since this embodiment is constructed so that it cuts-off the power transmission from the engine E and the motor M to the driving wheels D and connects the engine E and the motor M so as to transmit the power from one of them to the other, it is possible to keep stoppage of a vehicle with avoiding the transmission of driving force of them to the driving wheels D when trying to transmit the driving force of engine E to the motor M or reversely the driving force of motor M to the engine E during stoppage of a vehicle. Accordingly, it is possible to start a stopped engine E without requiring any starter as well as to increase chances of charging a battery 5 with enabling a motor M generate electricity during stoppage of a vehicle.

Then the power transmitting apparatus of a hybrid vehicle of a fourth embodiment of the present invention will be described.

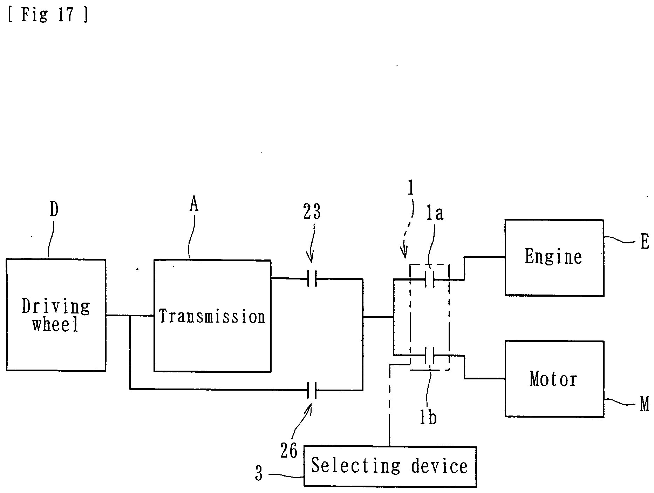

Similarly to the first-third embodiment the power transmitting apparatus of this embodiment is intended to transmit or cut-off the driving force of the engine E and the motor M as the power source of a hybrid vehicle to the driving wheels D. As shown in Fig. 17 it has a fifth clutch means 26 in addition to the fourth clutch means 23 (see the second embodiment) arranged between the output side of the first and second clutch means 1a, 1b and the transmission A mounted on a vehicle and adapted to transmit or cut-off the driving force of the engine E or the motor M to or from the transmission A. The fifth clutch means 26 is arranged between the output side of the first and second clutch means 1a, 1b and the driving wheels D with bypassing the transmission A and adapted to transmit and cut-off the driving force of the engine E or motor M to or from the driving wheels D without via the transmission A. Same reference numerals are used herein for designating same structural elements as those used in the first-third embodiments and detailed description of them will be omitted.

This embodiment is constructed so that it cuts-off the power transmission from the engine E and the motor M to the driving wheels D and connects the engine E and the motor M so as to transmit the power from one of them to the other. That is, the fourth clutch means 23 and fifth clutch means 26 enable to cut-off the power transmission from the engine E and the motor M to the driving wheels D as well as the first and second clutch means 1a, 1b enable to connect the engine E and the motor M so as to transmit the power from one of them to the other.

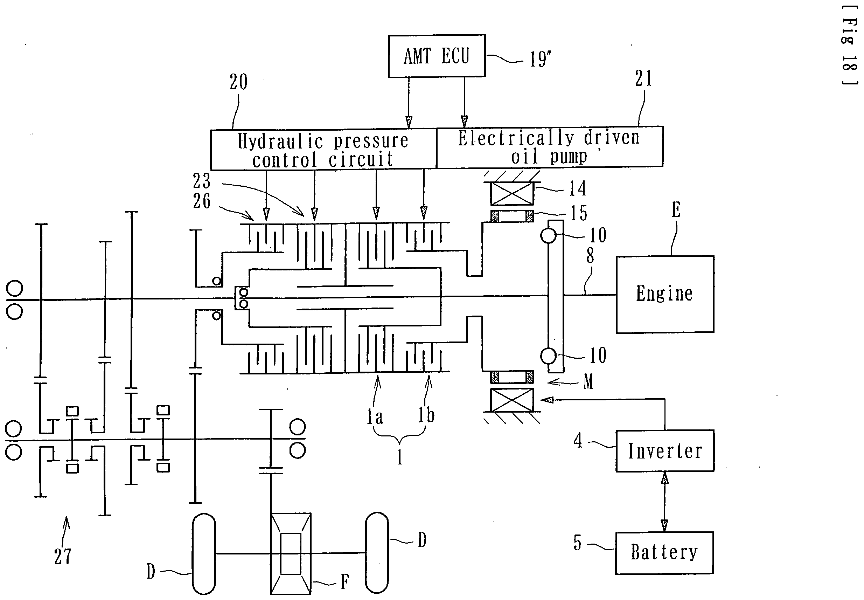

The fourth clutch means 23 and fifth clutch means 26 can be properly and selectively activated by the selecting device 3. Fig. 18 shows a modification in which the transmission A is replaced with a three-speed AMT 27 (Automatic Manual transmission). A reference numeral 19" denotes AMT ECU.

Similarly to the first-third embodiments since this embodiment is constructed so that it cuts-off the power transmission from the engine E and the motor M to the driving wheels D and connects the engine E and the motor M so as to transmit the power from one of them to the other, it is possible to keep stoppage of a vehicle with avoiding the transmission of driving force of them to the driving wheels D when trying to transmit the driving force of engine E to the motor M or reversely the driving force of motor M to the engine E during stoppage of a vehicle. Accordingly it is possible to start a stopped engine E without requiring any starter as well as to increase chances of charging a battery 5 with enabling a motor M generate electricity during stoppage of a vehicle.

- 1: clutch means
- 1a: first clutch means
- 1b: second clutch means
- 2: third clutch means
- 3: selecting device
- 4: inverter
- 5: battery
- 6: rotational member
- 7: rotational member
- 8: driving shaft
- 9: input member
- 10: damper mechanism
- 11: input member
- 12: input member
- 13: supporting member
- 14: stator
- 15: rotor
- 17: boxy member
- 18: interlocking member
- 19: CVT ECU
- 19': DCT ECU
- 19": AMT ECU
- 20: hydraulic pressure controlling circuit
- 21: electrically driven oil pump
- 22: continuously variable speed transmission
- 23: fourth clutch means
- 24: fourth clutch means
- 24a: fourth clutch means for odd numbered gear
- 24b: fourth clutch means for even numbered gear
- 25: DCT
- 26: fifth clutch means
- 27: three speed AMT
- E: engine
- M: motor
- D: driving wheel
- A: transmission
- P1-P3: hydraulic piston

## Claims

1. A power transmitting apparatus of a hybrid vehicle comprising:
a first clutch means (1a) arranged on the way of a power transmitting system from an engine (E) mounted on a vehicle to driving wheels (D) and adapted to transmit or cut-off the driving force of the engine (E) to or from the driving wheels (D);
a second clutch means (1b) arranged on the way of a power transmitting system from a motor (M) mounted on a vehicle to the driving wheels (D) and adapted to transmit or cut-off the driving force of the motor (M) to or from the driving wheels (D); and
the first and second clutch means (1a, 1b) being properly operated in accordance with running conditions of vehicle, the power transmission from one of the engine (E) and the motor (M) to the other of them can be performed with connecting them each other as well as with cutting-off the power transmission from the engine (E) and the motor (M) to the driving wheels (D), that the power **characterized in** transmitting apparatus further comprises a fourth clutch means (23 or 24) arranged between the output side of the first and second clutch means (1a, 1b) and a transmission (A) mounted on a vehicle and adapted to transmit or cut-off the driving force of the engine (E) or the motor (M) to or from the transmission (A), and that the driving force is transmitted to the transmission (A) only via the fourth clutch means (23 or 24).

2. A power transmitting apparatus of a hybrid vehicle of claim 1 further comprising a third clutch means (2) arranged between the engine (E) and the motor (M) with bypassing the first and second clutch means (1a, 1b) and adapted to transmit or cut-off the driving force from one of the engine (E) and the motor (M) to the other of them.

3. A power transmitting apparatus of a hybrid vehicle of claim 1 or 2 further comprising a fifth clutch means (26) arranged between the output side of the first and second clutch means (1a, 1b) and the driving wheels (D) with bypassing the transmission (A) mounted on a vehicle and adapted to transmit or cut-off the driving force of the engine (E) or the motor (M) to or from the driving wheels (D) without via the transmission (A).

4. A power transmitting apparatus of a hybrid vehicle of any one of claims 1, 2 or 4 wherein the first clutch means (1a), the second clutch means (1b) and two hydraulic pistons (P1, P2) corresponding to the first and second clutch means (1a, 1b) are arranged within a same boxy member (17), and wherein the first and second clutch means (1a, 1b) can be operated in a properly selective manner by controlling the hydraulic pressure for actuating the hydraulic pistons (P1, P2).

5. A power transmitting apparatus of a hybrid vehicle of any one of claims 1, 2, 4 or 5 wherein the second clutch means (1b) is activated to transmit the driving force of the motor (M) to the driving wheels (D) and simultaneously the first clutch is deactivated to cut-off the driving force of the engine (E) to the driving wheels (D) on start-up and run of a vehicle driven by the motor (M).

6. A power transmitting apparatus of a hybrid vehicle of any one of claims 1, 2, 4, 5 or 6 wherein the motor (M) is reversed on reverse start-up and reverse run of a vehicle driven by the motor (M).

7. A power transmitting apparatus of a hybrid vehicle of any one of claims 1, 2, 4-6 or 7 further comprising a battery (5) for driving the motor (M) and means for detecting remained electric amount of battery, and wherein both the driving force of the engine (E) and that of the motor (M) are simultaneously transmitted to the driving wheels (D) with activating both the first and second clutch means (1a, 1b) so long as the remained electric amount of battery (5) detected by the remained electric amount detecting means is within an optimum range.

8. A power transmitting apparatus of a hybrid vehicle of any one of claims 1, 2, 4-7 or 8 wherein further comprising a battery (5) for driving the motor (M) and means for detecting remained electric amount of battery (5), and wherein the driving force of the engine (E) is transmitted both to the driving wheels (D) and the motor (M) to make the motor (M) generate electricity when the remained electric amount of battery (5) detected by the remained electric amount detecting means during run of a vehicle is less than the predetermined value.

9. A power transmitting apparatus of a hybrid vehicle of any one of claims 1, 2, 4-8 or 9 wherein further comprising a battery (5) for driving the motor (M) and means for detecting remained electric amount of battery (5), and wherein the driving force of the engine (E) to the driving wheels (D) is cut-off and simultaneously the driving force of the engine (E) is transmitted to the motor (M) to make the motor (M) generate electricity when the remained electric amount of battery (5) detected by the remained electric amount detecting means during stoppage of a vehicle is less than the predetermined value.

10. A power transmitting apparatus of a hybrid vehicle of any one of claims 1, 2, 4-9 or 10 wherein the driving force of the engine (E) is transmitted to the driving wheels (D) and simultaneously the driving force of the motor (M) to the driving wheels (D) is cut-off on start-up under a low environmental temperature or high speed run of a vehicle.

11. A power transmitting apparatus of a hybrid vehicle of any one of claims 1, 2, 4-10 or 11 wherein an automatic transmission (A) is arranged on the way of a power transmitting system between the first and second clutch means (1a, 1b) and the driving wheels (D) and the speed of a vehicle can be changed by the automatic transmission (A).

12. A power transmitting apparatus of a hybrid vehicle of claim 12 wherein the transmission (A) is a continuously variable transmission (22).

13. A power transmitting apparatus of a hybrid vehicle of claim 12 wherein the transmission (A) is a double clutch type transmission.

14. A power transmitting apparatus of a hybrid vehicle of claim 12 wherein the transmission (A) is a single clutch type transmission.

15. A power transmitting apparatus of a hybrid vehicle of claim 2 wherein the third clutch means (2) is arranged at a radially inner side of a rotor (15) of the motor (M).

16. A power transmitting apparatus of a hybrid vehicle of any one of claims 1, 2, 4-15 or 16 wherein a damper mechanism (10) for damping a torque variation is arranged on the way of a power transmitting system between the engine (E) and the first clutch means (1a).

17. A power transmitting apparatus of a hybrid vehicle of any one of claims 1, 2, 4-16 or 17 further comprising an electrically driven oil pump (21), and wherein the first and second clutch means (1a, 1b) are arbitrarily activated by the hydraulic pressure generated by the electrically driven oil pump (21).

## Patentansprüche

1. Leistungsübertragungsvorrichtung eines Hybridfahrzeugs, umfassend:
ein erstes Kupplungsmittel (1a), das auf dem Weg eines Leistungsübertragungssystems von einem Motor (E), der an einem Fahrzeug angebracht ist, zu Antriebsrädern (D) angeordnet ist und ausgelegt ist, die Antriebskraft des Motors (E) zu bzw. von den Antriebsrädern (D) zu übertragen oder zu trennen;
ein zweites Kupplungsmittel (1b), das auf dem Weg eines Leistungsübertragungssystems von einem Motor (M), der an einem Fahrzeug angebracht ist, zu den Antriebsrädern (D) angeordnet ist und ausgelegt ist, die Antriebskraft des Motors (M) zu bzw. von den Antriebsrädern (D) zu übertragen oder zu trennen; und
wobei das erste und zweite Kupplungsmittel (1a, 1b) ordnungsgemäß entsprechend der Betriebsbedingungen des Fahrzeugs betrieben werden, die Leistungsübertragung von entweder dem Motor (E) oder dem Motor (M) zu dem jeweils anderen davon kann mittels Verbinden miteinander sowie mittels Trennen der Leistungsübertragung von dem Motor (E) und dem Motor (M) zu den Antriebsrädern (D) durchgeführt werden, **dadurch gekennzeichnet, dass** die Leistungsübertragungsvorrichtung ferner ein viertes Kupplungsmittel (23 oder 24) umfasst, das zwischen der Ausgangsseite des ersten und des zweiten Kupplungsmittels (1a, 1b) und einem Getriebe (A) angeordnet ist, das an einem Fahrzeug angebracht ist und ausgelegt ist, die Antriebskraft des Motors (E) oder des Motors (M) zu oder von dem Getriebe (A) zu übertragen bzw. zu trennen, und dass die Antriebskraft nur über das vierte Kupplungsmittel (23 oder 24) an das Getriebe (A) übertragen wird.

2. Leistungsübertragungsvorrichtung eines Hybridfahrzeugs nach Anspruch 1, ferner ein drittes Kupplungsmittel (2) umfassend, das zwischen dem Motor (E) und dem Motor (M) unter Umgehung des ersten und des zweiten Kupplungsmittels (1a, 1b) angeordnet ist und ausgelegt ist, die Antriebskraft von entweder dem Motor (E) oder dem Motor (M) zu dem jeweils anderen davon zu übertragen oder zu trennen.

3. Leistungsübertragungsvorrichtung eines Hybridfahrzeugs nach Anspruch 1 oder 2, ferner ein fünftes Kupplungsmittel (26) umfassend, das zwischen der Ausgangsseite des ersten und zweiten Kupplungsmittels (1a, 1b) und den Antriebsrädern (D) unter Umgehung des Getriebes (A), das an einem Fahrzeug angebracht ist, angeordnet ist und ausgelegt ist, die Antriebskraft des Motors (E) oder des Motors (M) zu oder von den Antriebsrädern (D) zu übertragen oder zu trennen unter Ausschluss des Wegs über das Getriebe (A).

4. Leistungsübertragungsvorrichtung eines Hybridfahrzeugs nach einem der Ansprüche 1, 2 oder 4, wobei das erste Kupplungsmittel (1a), das zweite Kupplungsmittel (1b) und zwei Hydraulikkolben (P1, P2), die mit dem ersten und zweiten Kupplungsmittel (1a, 1b) zusammenwirken, innerhalb eines gleichen kastenförmigen Teils (17) angeordnet sind, und wobei das erste und zweite Kupplungsmittel (1a, 1b) durch Steuern des Hydraulikdrucks zum Betätigen der Hydraulikkolben (P1, P2) in einer ordnungsgemäß selektiven Weise betrieben werden können.

5. Leistungsübertragungsvorrichtung eines Hybridfahrzeugs nach einem der Ansprüche 1, 2,4 oder 5, wobei das zweite Kupplungsmittel (1b) aktiviert ist, um die Antriebskraft des Motors (M) auf die Antriebsräder (D) zu übertragen und die erste Kupplung gleichzeitig deaktiviert ist, um die Antriebskraft des Motors (E) zu den Antriebsrädern (D) beim Starten und Fahren eines vom Motor (M) angetriebenen Fahrzeugs zu trennen.

6. Leistungsübertragungsvorrichtung eines Hybridfahrzeugs nach einem der Ansprüche 1, 2, 4, 5 oder 6, wobei der Motor (M) bei Rückwärtsstarten und Rückwärtsfahrt eines Fahrzeugs, das vom Motor (M) angetrieben wird, reversiert wird.

7. Leistungsübertragungsvorrichtung eines Hybridfahrzeugs nach einem der Ansprüche 1, 2, 4 - 6 oder 7, ferner umfassend eine Batterie (5) zum Antreiben des Motors(M) und Mittel zum Erfassen einer verbliebenen elektrischen Menge der Batterie, und wobei sowohl die Antriebskraft des Motors (E) als auch die des Motors (M) gleichzeitig an die Antriebsräder (D) übertragen werden, wobei sowohl das erste als auch das zweite Kupplungsmittel (1a, 1b) so lange aktiviert sind, wie die verbliebene elektrische Menge der Batterie (5), die von dem Mittel zum Erfassen einer verbliebenen elektrischen Menge erfasst wird, in einem optimalen Bereich liegt.

8. Leistungsübertragungsvorrichtung eines Hybridfahrzeugs nach einem der Ansprüche 1, 2, 4 - 7 oder 8, ferner umfassend eine Batterie (5) zum Antreiben des Motors(M) und Mittel zum Erfassen einer verbliebenen elektrischen Menge der Batterie (5), und wobei die Antriebskraft des Motors (E) sowohl an die Antriebsräder (D) als auch an den Motor (M) übertragen wird, damit der Motor (M) Elektrizität erzeugt, wenn die verbliebene elektrische Menge der Batterie (5), die während der Fahrt eines Fahrzeugs von dem Mittel zum Erfassen einer verbliebenen elektrischen Menge erfasst wird, geringer als ein vorgegebener Wert ist.

9. Leistungsübertragungsvorrichtung eines Hybridfahrzeugs nach einem der Ansprüche 1, 2, 4 - 8 oder 9, ferner umfassend eine Batterie (5) zum Antreiben des Motors(M) und Mittel zum Erfassen einer verbliebenen elektrischen Menge der Batterie (5), und wobei die Antriebskraft des Motors (E) zu den Antriebsrädern (D) abgeschaltet und gleichzeitig die Antriebskraft des Motors (E) an den Motor (M) übertragen wird, damit der Motor (M) Elektrizität erzeugt, wenn die verbliebene elektrische Menge der Batterie (5), die während des Stillstands eines Fahrzeugs von dem Mittel zum Erfassen einer verbliebenen elektrischen Menge erfasst wird, geringer als ein vorgegebener Wert ist.

10. Leistungsübertragungsvorrichtung eines Hybridfahrzeugs nach einem der Ansprüche 1, 2, 4 - 9 oder 10, wobei die Antriebskraft des Motors (E) an die Antriebsräder (D) übertragen und gleichzeitig die Antriebskraft des Motors (M) zu den Antriebsrädern (D) beim Starten bei niedriger Umgebungstemperatur oder bei Hochgeschwindigkeitsfahrt eines Fahrzeugs getrennt wird.

11. Leistungsübertragungsvorrichtung eines Hybridfahrzeugs nach einem der Ansprüche 1, 2, 4 -10 oder 11, wobei ein Automatikgetriebe (A) auf dem Weg eines Leistungsübertragungssystems zwischen dem ersten und zweiten Kupplungsmittel (1a, 1b) und den Antriebsrädern (D) angeordnet ist und die Geschwindigkeit eines Fahrzeugs von dem Automatikgetriebe (A) geändert werden kann.

12. Leistungsübertragungsvorrichtung eines Hybridfahrzeugs nach Anspruch 12, wobei das Getriebe (A) ein stufenloses Getriebe (22) ist.

13. Leistungsübertragungsvorrichtung eines Hybridfahrzeugs nach Anspruch 12, wobei das Getriebe (A) ein Doppelkupplungsgetriebe ist.

14. Leistungsübertragungsvorrichtung eines Hybridfahrzeugs nach Anspruch 12, wobei das Getriebe (A) ein Getriebe mit einer einzigen Kupplung ist.

15. Leistungsübertragungsvorrichtung eines Hybridfahrzeugs nach Anspruch 2, wobei das dritte Kupplungsmittel (2) an einer radial inneren Seite eines Rotors (15) des Motors (M) angeordnet ist.

16. Leistungsübertragungsvorrichtung eines Hybridfahrzeugs nach einem der Ansprüche 1, 2, 4 - 15 oder 16, wobei ein Dämpfmechanismus (10) zum Dämpfen einer Drehmomentänderung auf dem Weg eines Leistungsübertragungssystems zwischen dem Motor (E) und dem ersten Kupplungsmittel (1a)angeordnet ist.

17. Leistungsübertragungsvorrichtung eines Hybridfahrzeugs nach einem der Ansprüche 1, 2, 4 - 16 oder 17, ferner umfassend eine elektrisch angetriebene Ölpumpe (21), und wobei das erste und zweite Kupplungsmittel (1a, 1b) von dem Hydraulikdruck, der von der elektrisch angetriebenen Ölpumpe (21) erzeugt wird, beliebig aktiviert werden.

## Revendications

1. Appareil de transmission d'énergie pour véhicule hybride, comprenant:
un premier moyen d'embrayage (1a) agencé sur la voie d'un système de transmission d'énergie pour un moteur (E) monté sur un véhicule vers les roues motrices (D) et destiné à transmettre ou interrompre la force d'entrainement du moteur (E) vers ou des roues motrices (D);
un deuxième moyen d'embrayage (1b) agencé sur la voie d'un système de transmission d'énergie pour un moteur (M) monté sur un véhicule vers les roues motrices (D) et destiné à transmettre ou interrompre la force d'entrainement du moteur (M) vers ou des roues motrices (D); et
les premier et deuxième moyen d'embrayage (1a, 1b) étant actionnés en fonction des conditions de roulage du véhicule,
la transmission d'énergie depuis l'un du moteur (E) et du moteur (M) vers l'autre de ceux-ci peut être effectuée par connexion de l'un à l'autre et interruption de la transmission d'énergie du moteur (E) et du moteur (M) vers les roues motrices (D), **caractérisé en ce que** l'appareil de transmission d'énergie comprend en outre, un quatrième moyen d'embrayage (23 ou 24) agencé entre le côté sortie des premier et deuxième moyens d'embrayage (1a, 1b) et une transmission (A) montée sur un véhicule et destinée à transmettre ou interrompre la force d'entrainement du moteur (E) ou du moteur (M) vers ou de la transmission (A), et **en ce que** la force d'entrainement est transmise à la transmission (A) uniquement via le quatrième moyen d'embrayage (23 ou 24).

2. Appareil de transmission d'énergie pour véhicule hybride selon la revendication 1, comprenant en outre, un troisième moyen d'embrayage (2) agencé entre le moteur (E) et le moteur (M) en évitant le premier et le deuxième moyen d'embrayage (1a, 1b) et destiné à transmettre ou à interrompre la force d'entrainement d'un des moteurs (E) et (M) vers l'autre.

3. Appareil de transmission d'énergie pour véhicule hybride selon la revendication 1 ou 2, comprenant en outre, un cinquième moyen d'embrayage (26) agencé entre le côté sortie des premier et deuxième moyens d'embrayage (1a, 1b) et les roues motrices (D) en évitant la transmission (A) montée sur un véhicule et destiné à transmettre ou à interrompre la force d'entrainement du moteur (E) ou du moteur (M) vers ou des roues motrices (D) sans passer par la transmission (A).

4. Appareil de transmission d'énergie pour véhicule hybride selon l'une quelconque des revendications 1, 2 et 4, où le premier moyen d'embrayage (1a), le deuxième moyen d'embrayage (1b) et deux pistons hydrauliques (P1, P2) correspondant aux premier et deuxième moyens d'embrayage (1a, 1b) sont agencés dans un même logement (17), et où les premier et deuxième moyens d'embrayage (1a, 1b) peuvent être mis en oeuvre de manière sélective par contrôle de la pression hydraulique pour actionner les pistons hydrauliques (P1, P2).

5. Appareil de transmission d'énergie pour véhicule hybride selon l'une quelconque des revendications 1, 2, 4 et 5, où le deuxième moyen d'embrayage (1b) est actionné pour transmettre la force d'entrainement du moteur (M) aux roues motrices (D) et simultanément, le premier moyen d'embrayage est désactivé pour interrompre la force d'entrainement du moteur (E) aux roues motrices (D) lors du démarrage et de la course d'un véhicule entrainé par le moteur (M).

6. Appareil de transmission d'énergie pour véhicule hybride selon l'une quelconque des revendications 1, 2, 4, 5 et 6, où le moteur (M) est inversé lors du démarrage inverse et de la course inverse d'un véhicule entrainé par le moteur (M).

7. Appareil de transmission d'énergie pour véhicule hybride selon l'une quelconque des revendications 1, 2, 4-6 et 7, comprenant en outre, une batterie (5) pour entrainer le moteur (M) et des moyens de détection de la charge électrique résiduelle de la batterie, et où la force d'entrainement du moteur (E) et celle du moteur (M) sont transmises simultanément aux roues motrices (D) avec activation des premier et deuxième moyens d'embrayage (1a, 1b) tant que la charge électrique résiduelle de la batterie (5) détectée parles moyens de détection de la charge électrique résiduelle se situe dans une plage optimale.

8. Appareil de transmission d'énergie pour véhicule hybride selon l'une quelconque des revendications 1, 2, 4-7 et 8, comprenant en outre, une batterie (5) pour entrainer le moteur (M) et des moyens de détection de la charge électrique résiduelle de la batterie (5), et où la force d'entrainement du moteur (E) est transmise aux roues motrices (D) et au moteur (M) pour que le moteur (M) produise de l'électricité lorsque la charge électrique résiduelle de la batterie (5) détectée par les moyens de détection de la charge électrique résiduelle pendant la course d'un véhicule est inférieure à une valeur prédéterminée.

9. Appareil de transmission d'énergie pour véhicule hybride selon l'une quelconque des revendications 1, 2,4-8 et 9, comprenant en outre, une batterie (5) pour entrainer le moteur (M) et des moyens de détection de la charge électrique résiduelle de la batterie (5), et où la force d'entrainement du moteur (E) aux roues motrices (D) est interrompue et simultanément, la force d'entrainement du moteur (E) est transmise au moteur (M) pour que le moteur (M) produise de l'électricité lorsque la charge électrique résiduelle de la batterie (5) détectée par les moyens de détection de la charge électrique résiduelle pendant l'arrêt d'un véhicule est inférieure à une valeur prédéterminée.

10. Appareil de transmission d'énergie pour véhicule hybride selon l'une quelconque des revendications 1, 2, 4-9 et 10, où la force d'entrainement du moteur (E) est transmise aux roues motrices (D) et simultanément, la force d'entrainement du moteur (M) vers les roues motrices (D) est interrompue au démarrage à basse température ambiante ou haute vitesse du véhicule.

11. Appareil de transmission d'énergie pour véhicule hybride selon l'une quelconque des revendications 1, 2, 4-10 et 11, où une transmission automatique (A) est agencée sur la voie d'un système de transmission d'énergie entre le premier et le deuxième moyen d'embrayage (1a, 1b) et les roues motrices (D) et la vitesse du véhicule peut être modifiée par la transmission automatique (A).

12. Appareil de transmission d'énergie pour véhicule hybride selon la revendication 12, où la transmission (A) est une transmission variable continue (22).

13. Appareil de transmission d'énergie pour véhicule hybride selon la revendication 12, où la transmission (A) est une transmission de type à double embrayage.

14. Appareil de transmission d'énergie pour véhicule hybride selon la revendication 12, où la transmission (A) est une transmission de type à simple embrayage.

15. Appareil de transmission d'énergie pour véhicule hybride selon la revendication 2, où le troisième moyen d'embrayage (2) est agencé sur un côté intérieur radial d'un rotor (15) du moteur (M).

16. Appareil de transmission d'énergie pour véhicule hybride selon l'une quelconque des revendications 1, 2,4-15 et 16, où un mécanisme d'amortissement (10) pour amortir la variation de couple est agencé sur la voie d'un système de transmission d'énergie entre le moteur (E) et le premier moyen d'embrayage (1a).

17. Appareil de transmission d'énergie pour véhicule hybride selon l'une quelconque des revendications 1, 2, 4-16 et 17, comprenant en outre, une pompe à huile à entrainement électrique (21), et où les premier et deuxième moyens d'embrayage (1a, 1b) sont activés de manière arbitraire par la pression hydraulique générée par la pompe à huile à entrainement électrique (21).
